# DEMANDE DE BREVET EUROPEEN

(11) **EP 2 168 744 A1**
(43) Date de publication de la demande: **31.03.2010**
(21) Numéro de dépôt: 09290730.2
(22) Date de dépôt: 25.09.2009
(51) Int. Cl.: B29C 33/50, B29C 33/38, F15D 1/12, F04D 29/22, B29C 43/36, B29C 59/02

(54) **Procédé de structuration de pièces internes pour machines tournantes rotodynamiques**

(30) Priorité: 29.09.2008 FR 0805391
(71) Demandeur: IFP, 92852 Rueil-Malmaison Cédex (FR)
(72) Inventeur: Charron, Yves, 91310 Longpont-sur-Orge (FR); Gautreau, Nicolas, 78360 Montesson (FR)

(57) **Abrégé**

L'invention concerne la réduction de traînée dans les machines tournantes en contact avec un fluide en écoulement turbulent, au moyen d'un procédé de structuration de surfaces internes, qui comprend :
- la fabrication d'un moule primaire comprenant des éléments structurés sur sa surface ;
- la fabrication d'un moule secondaire flexible obtenu par réplique du moule primaire, ledit moule étant de dimension inférieure à la pièce à imprimer;
- l'application d'un revêtement permettant l'impression sur le substrat de la pièce à structurer,
- l'introduction d'une structure gonflable M comprenant le moule secondaire flexible à l'intérieur des pièces à structurer,
- l'expansion radiale de la structure gonflable M sur le revêtement pour effectuer l'impression,

Le rapport des dimensions du moule primaire et celles de la pièce à imprimer détermine le taux d'expansion du moule secondaire selon ses trois directions principales. Les éléments structurés du moule primaire sont conçus en fonction de ces expansions selon ses trois directions principales.

## Description

L'invention concerne la réduction de la friction turbulente et l'augmentation du rendement dans les machines tournantes hydrauliques, par la mise en place de surfaces structurées sur les pièces internes desdites machines. L'objet de l'invention est un procédé de structuration des pièces internes de machines tournantes.

Une paroi munie d'éléments structurés sur sa surface en déplacement relatif par rapport à un fluide (paroi fixe et fluide mobile ou l'inverse) permet de réduire la traînée aérodynamique sur cette paroi sous certaines conditions. Une surface structurée agit sur un écoulement turbulent en réduisant certaines fluctuations de vitesse (pouvant être désignées par turbulence), principalement celles au niveau de la sous-couche turbulente. De par sa géométrie, une surface structurée tend à augmenter la surface en contact avec l'écoulement et, par conséquent, à augmenter les pertes visqueuses. Toutefois, avec une géométrie adaptée à l'écoulement, la réduction des pertes turbulentes d'une surface structurée est nettement supérieure à l'augmentation des pertes visqueuses.

L'objectif de la restructuration de surface est de modifier l'état de surface, pour obtenir :
- soit des surfaces ultra lisses ;
- soit des surfaces structurées bi ou tri dimensionnelles.

Les surfaces structurées peuvent être utilisées avantageusement pour réduire les pertes de charge dans les conduites de gaz ou de liquide (écoulement turbulent), mais également pour réduire la friction turbulente dans les machines tournantes et ainsi augmenter leur rendement hydraulique. Leur utilisation est possible dans les compresseurs, les expandeurs, les pompes ainsi que dans les turbines à gaz, à vapeur ou à liquide. Elle est également envisageable pour les machines diphasiques gaz - liquide : pompes et compresseurs.

Dans une machine tournante, les surfaces structurées peuvent être utilisées aussi bien sur les parties fixes que sur les parties mobiles, mais, plus particulièrement, lorsqu'une paroi est en déplacement relatif par rapport à un écoulement turbulent. La direction des structures d'une paroi doit être aussi parallèle que possible que celle de l'écoulement relativement à cette paroi.

Dans le cas d'une partie fixe, c'est la vitesse absolue Va (vecteur **Va** compte tenu de sa direction) du fluide qui constitue la vitesse relative par rapport à cette paroi.

Dans le cas d'une partie tournante animée d'une vitesse d'entraînement Ve (vecteur **Ve** compte tenu de sa direction), le vecteur de la vitesse relative **Vr** s'obtient par différence des vecteurs **Va** et **Ve.**

La réduction de traînée est optimale lorsque la dimension des structures est adaptée aux caractéristiques de l'écoulement relatif à la paroi, principalement, la densité, la viscosité et la vitesse du fluide relativement à cette paroi.

### Définitions

Par la suite, on désigne par "roue" ou "impulseur" ou "élément rotorique", l'élément tournant servant au transfert de l'énergie entre un fluide et une machine (mécanique). On désigne par "redresseur" ou "distributeur" ou "élément statorique", l'élément fixe servant à la conversion de l'énergie potentielle (pression) en énergie cinétique (vitesse), ou inversement selon qu'il s'agisse d'un système de compression ou de détente. On désigne par "cellule hydraulique" le couple constitué d'un élément rotorique et d'un élément statorique.

Dans la suite de la description, on entend par "structuration d'une surface" ou "impression d'une surface structurée", soit :
- l'ultra lissage d'une surface ;
- l'impression de surfaces structurées conventionnelles se présentant sous la forme de rainures alignées dans la direction de l'écoulement.

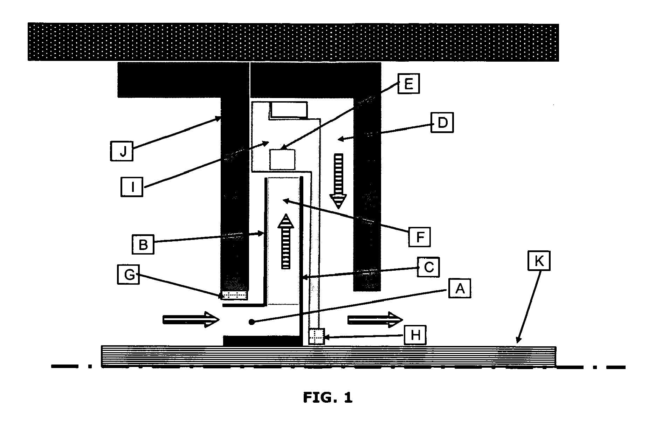

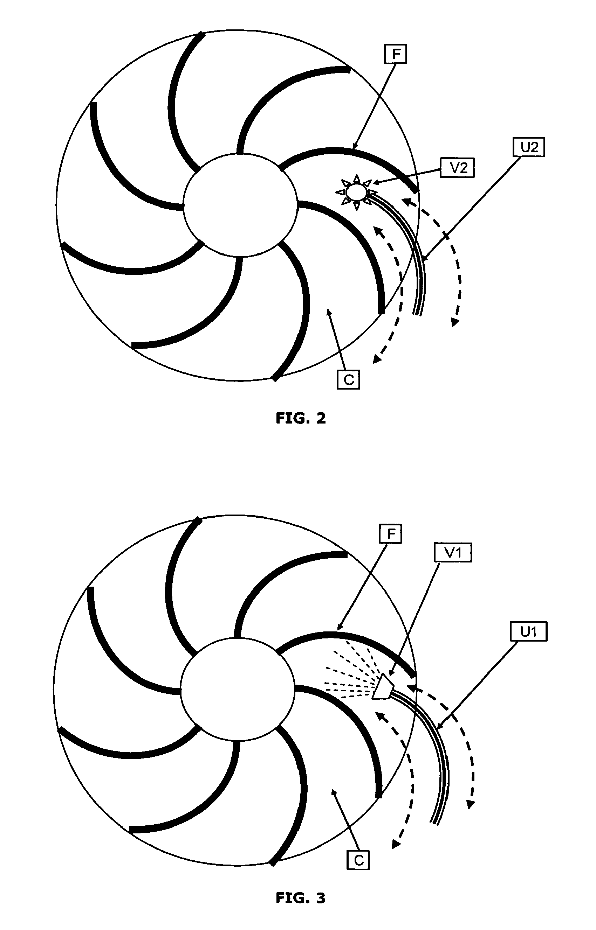

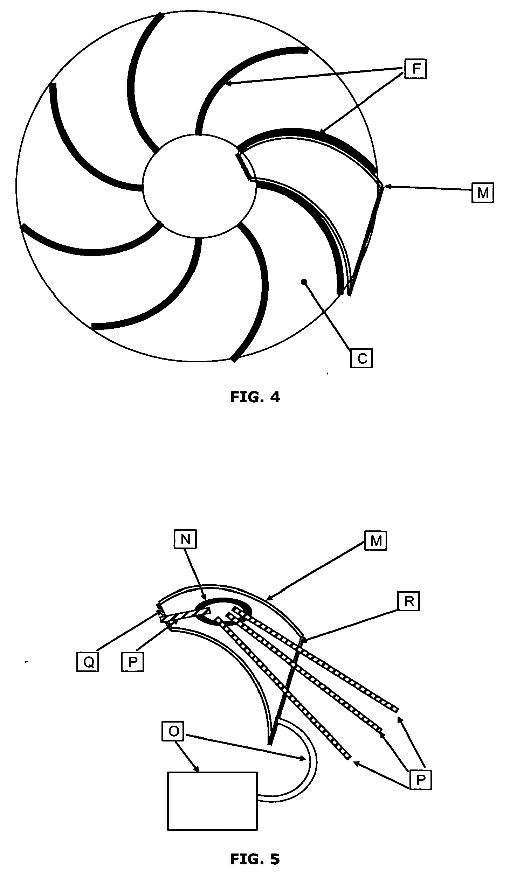

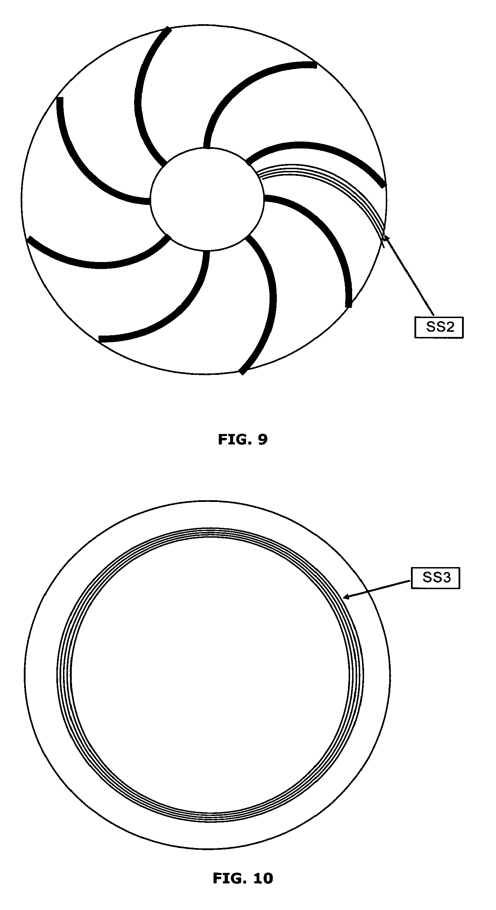

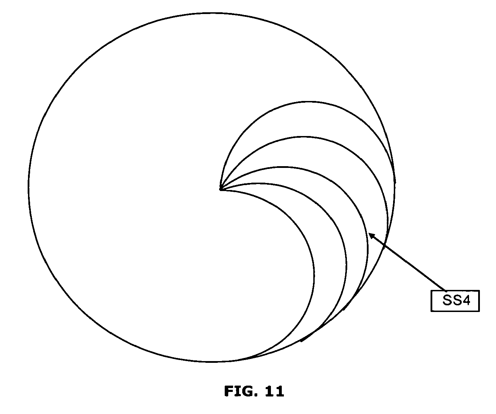

Dans les figures 1 à 11 illustrant à titre non limitatif l'invention, on désigne par :

| | |
|---|---|
| A | Impulseur ou roue |
| B | Couvercle de la roue |
| C | Disque de la roue |
| D | Canal de retour |
| E | Diffuseur |
| F | Aube de la roue |
| G | Etanchéité de couvercle |
| H | Etanchéité de disque |
| I | Mur inférieur du canal de retour |
| J | Mur supérieur du canal de retour |
| K | Arbre de rotation |
| L | Carter de la machine tournante |
| M | Baudruche |
| N | Rotule ou anneau d'extension |
| O | Système de pressurisation de la baudruche |
| P | Tiges d'extension de la baudruche |
| Q | Flasque interne de maintien de la baudruche |
| R | Flasque externe de maintien de la baudruche |
| T | Queue d'aronde |
| U1 | Rampe d'injection de revêtements |
| U2 | Rampe de grenaillage |
| V1 | Tuyère d'injection de revêtements |
| V2 | Tuyère de grenaillage |
| SS1 | Surface structurée sur aube |
| SS2 | Surface structurée sur disque de roue - interne |
| SS2 | Surface structurée sur couvercle de roue - interne |
| SS3 | Surface structurée sur disque de roue - externe |
| SS3 | Surface structurée sur couvercle de roue - externe |
| SS4 | Surface structurée sur mur inférieur côté disque |
| SS4 | Surface structurée sur mur supérieur côté couvercle |

La roue ou l'impulseur est généralement constituée d'aubes F montées entre un disque C et un couvercle B dans le cas de roues fermées (Figure 1). Le disque C est monté sur l'arbre de rotation K qu'il entraîne ou qui l'entraîne. L'ensemble des roues et de l'arbre de rotation constitue la partie rotorique.
Le redresseur ou le distributeur est généralement constitué d'un conduit D transférant le fluide de la sortie d'un élément rotorique à l'entrée du suivant (Figure 1). Il peut être constitué de parois ou murs I et J usinés, moulés ou forgés, intégrés ou séparés. Les fuites de fluide sont limitées au niveau de l'arbre de rotation et des éléments statoriques par des systèmes d'étanchéités G à bagues, à labyrinthes ou autres. L'ensemble du système intégrant les redresseurs, distributeurs, systèmes d'étanchéités constitue la partie statorique.

### Art antérieur

Les surfaces structurées conventionnelles peuvent être classées en deux catégories selon leur forme et leurs performances hydrodynamiques et/ou aérodynamiques :
- formes bi dimensionnelles - dans ce cas, les surfaces structurées peuvent s'assimiler à des rainures orientées dans la direction de l'écoulement. Le mode de dimensionnement est connu de l'homme du métier. La forme de base (dans la direction perpendiculaire à l'écoulement) est variable, par exemple, triangulaire, incurvée, trapézoïdale ou en lame de couteau. Plus généralement la forme structurée doit présenter une forte concavité. La réduction de traînée se situe entre 6 et 12 % dépendant de la forme transverse de la structure.
- formes tri dimensionnelles - dans ce cas, les surfaces structurées peuvent comporter des formes relativement complexes intégrant plusieurs mécanismes de réduction de traînée aérodynamique, par exemple, une surface structurée bi dimensionnelle superposée à une onde transverse (comme décrite dans la demande de brevet FR 2 899 945) ou encore superposée à une onde méridienne orthogonale en synchronisme avec l'onde transverse (comme décrite dans la demande de brevet 08/01.331).

Plusieurs méthodes ont été proposées pour la réalisation de surfaces structurées à l'intérieur de machines tournantes.

Le brevet US 6 666 646 B1 -"2003 - "Drag reduction for gas turbines" décrit une méthode désignée "High Velocity Oxyfuel" consistant à appliquer sur un substrat une matière métallique ou en céramique à très grande vitesse et à très haute température au travers d'un masque. Cette méthode permet de fabriquer des surfaces structurées portées à une température de l'ordre de 1000°C lors de l'utilisation d'une turbine à gaz. La matière (Cobalt, carbone, fer, tungstène...) est injectée en association avec un carburant (kérosène, acétylène, propane...) à une vitesse très élevée, de l'ordre de 1.2 à 2.4 km/s, facilitant sa fusion avec le substrat. Ce type de méthode est réservé à des applications très particulières (notamment, température d'utilisation très élevée et faible surface), le coût étant particulièrement élevé.

Le brevet 5 846 055 - 1998 - "Structured surfaces for turbo machine parts" décrit l'utilisation de surfaces structurées sur les internes de turbomachines, principalement dans des pompes véhiculant un liquide. Du fait qu'il s'agisse d'une machine véhiculant un liquide éventuellement visqueux, la dimension des structures est grande, voire très grande, comparée à celle d'un gaz (10 à 100 fois plus grande) et le nombre des structures est, par conséquent, réduit, voire très réduit, pour une même surface (inversement proportionnel à la dimension). Ces conditions particulières permettent, selon ce brevet, d'envisager un très grand nombre de moyens de fabrication. Selon une première méthode, les surfaces structurées peuvent être obtenues par usinage sur la surface même des internes de la machine ou du revêtement recouvrant cette surface. Selon une deuxième méthode, un film comportant des éléments structurés est collé sur la surface des internes. Selon une troisième méthode, les pièces moulées ou coulées (matières plastiques) lors de leur fabrication utilisent des moules particuliers comportant des surfaces structurées. D'autres méthodes sont citées comme l'érosion électro chimique ou l'ablation laser. Ces méthodes sont difficiles à appliquer dans le cas de pièces avec une géométrie complexe et devant comporter un grand nombre de structures de petite taille.

Le procédé selon l'invention permet de remédier à l'ensemble des inconvénients des solutions connues de l'art antérieur, en permettant la réalisation de surfaces structurées de tout type, sur des internes de machines tournantes, au moyen d'un procédé d'impression de surfaces structurées sur le revêtement de ces pièces internes.

### Liste des figures

La figure 1 représente une vue méridienne (coupe parallèle à l'axe de rotation) des internes d'une machine tournante comprenant les parties fixes (statoriques) et tournantes (rotoriques).
La figure 2 représente un système de grenaillage entre deux aubes F et entre le disque C et le couvercle B, utilisable dans le procédé selon l'invention.
La figure 3 représente un système d'application de revêtement entre deux aubes F et entre le disque C et le couvercle B, utilisable dans le procédé selon l'invention.
La figure 4 est une vue dans un plan radial (plan perpendiculaire à l'axe de rotation) d'une baudruche M de structuration de revêtements entre deux aubes F et le disque C et le couvercle B d'une roue, utilisable dans le procédé selon l'invention.
La figure 5 est une vue dans un plan radial d'une baudruche M pour la réalisation de surfaces structurées sur un revêtement. La baudruche comprend, entre autres, la partie extensible, les flasques interne Q et externe R, les tiges d'extension P et l'anneau d'appui des tiges ou la rotule N interne à la baudruche. Un système de pressurisation O est connecté à la baudruche pour le contrôle de son expansion.
La figure 6 est une vue dans un plan parallèle à un plan méridien à la machine tournante de la rotule ou de l'anneau d'appui des tiges d'extension de la baudruche
La figure 7 représente les flasques interne (Q) ou externe (R) de maintien de la baudruche à l'aide des queues d'aronde T ancrées dans les flasques. Vue d'une tige d'extension P traversant le flasque. Un système d'étanchéité est pourvu entre le flasque et une tige d'extension.
La figure 8 est une représentation de surfaces structurées bi dimensionnelles (rainures dans le sens de l'écoulement) le long d'une aube d'impulseur - Structures sur l'intrados et l'extrados de l'aube (Structures de type SS1).
La figure 9 est une représentation de surfaces structurées bi dimensionnelles sur les parties internes du disque et du couvercle de l'impulseur (Structures de type SS2).
La figure 10 est une représentation de surfaces structurées bi dimensionnelles sur les parties externes du disque et du couvercle de l'impulseur (Structures de type SS3).
La figure 11 est une représentation de surfaces structurées bi dimensionnelles sur le mur inférieur (côté disque) et le mur supérieur (côté couvercle) des éléments statoriques (Structures de type SS4).

### Description de l'invention

### Résumé de l'invention

L'invention concerne un procédé d'impression d'une surface structurée sur au moins une pièce interne de machines tournantes qui comprend les étapes suivantes :
a. fabrication d'un moule primaire comprenant des éléments structurés sur sa surface sous forme d'image positive du dessin à imprimer;
b. fabrication d'un moule secondaire flexible obtenu par réplique du moule primaire, ledit moule secondaire étant de dimension inférieure à la pièce à structurer;
c. application d'un revêtement permettant l'impression sur le substrat de la pièce à structurer,
d. introduction d'une structure gonflable M comprenant le moule secondaire flexible à l'intérieur de la pièce à structurer,
e. expansion radiale de la structure gonflable M sur le revêtement pour effectuer l'impression,
f. retrait de la structure gonflable M,
le rapport des directions du moule primaire et celles de la pièce à imprimer déterminant le taux d'expansion du moule secondaire selon ses trois directions principales et les structures du moule primaire étant conçues en fonction de ces expansions selon ses trois directions principales.

De préférence, le substrat de la pièce à structurer est grenaillé avant l'application du revêtement.

L'expansion radiale e. peut être effectuée par mise sous pression de la structure gonflable M.

Le retrait de la structure gonflable M peut être effectué par diminution de la pression et pelage.

Le retrait de la structure gonflable M peut être effectué par variation de l'expansion axiale et pelage.

La structure gonflable M peut être un manchon monté sur un organe de gonflage ou une baudruche.

Dans un mode de réalisation, le revêtement est polymérisable et l'expansion de la structure gonflable M est réalisée au cours de la phase de polymérisation du revêtement.

Dans un autre mode de réalisation, le revêtement est thermoplastique et l'expansion de la structure gonflable M est réalisée en chauffant avant ou en cours d'impression le revêtement et en le refroidissant juste avant la phase de retrait.

De préférence, on limite l'expansion de la structure gonflable M dans la direction non limitée en expansion par les parois au moyen d'un système limiteur de l'expansion constitué de tiges d'extension P montées sur des flasques rigides Q et R et réunies intérieurement sur un anneau ou une rotule N.

Dans un mode de réalisation, l'état de surface de la pièce requis après impression est ultra lisse.

Dans un autre mode de réalisation, l'état de surface de la pièce requis après impression est structuré de manière bi ou tridimensionnelle.

L'invention concerne également une pièce interne de machines tournantes en contact avec un fluide en écoulement turbulent comportant une surface structurée orientée dans le sens de l'écoulement et imprimée selon le procédé décrit ci-dessus. Avantageusement, ladite pièce interne est située dans les tubulures d'entrée et de sortie des machines tournantes; les ailettes dans le cas de cellules hydrauliques axiales;le canal hydraulique des parties rotoriques et statoriques dans le cas de cellules hydrauliques radiales ou radio axiales ; les parties externes des impulseurs radiaux (couvercle et disque) ainsi que les parties en vis-à-vis avec les impulseurs; l'enveloppe entourant l'arbre de transmission au niveau des parties statoriques dans les machines radiales.

L'invention concerne enfin une méthode de réduction de la traînée dans les machines tournantes rotodynamiques en contact avec un fluide en écoulement turbulent comportant la structuration d'au moins une pièce interne au moyen du procédé d'impression décrit ci-dessus.

### Description détaillée de l'invention

La présente invention comporte l'utilisation d'une structure gonflable M (baudruche ou manchon monté sur un organe gonflable) pour imprimer le dessin d'une surface structurée (en négatif) sur un revêtement déposé à la surface d'une pièce interne d'une machine tournante en contact avec un écoulement turbulent.

La structure gonflable M est appliquée soit au cours de la phase de polymérisation du revêtement, soit en chauffant avant ou en cours d'impression un revêtement thermoplastique et en le refroidissant juste avant la phase de retrait (démoulage).

La mise en oeuvre de cette impression comprend trois étapes principales :
- La fabrication d'un moule primaire comprenant des éléments structurés sur sa surface. Ce moule primaire peut présenter une forme plane, cylindrique ou toute autre forme adaptée à celle de la pièce à imprimer. Avantageusement il est constitué d'une matière compatible avec la fabrication des surfaces structurées, mais également avec la fabrication d'un moule secondaire. Les structures du moule primaire forment une image identique à celle finale recherchée. Il s'agit donc d'une image positive.
- La fabrication d'un moule secondaire flexible obtenu par réplique du moule primaire. Dans le cas d'une plaque plane constituant le moule primaire, le moule secondaire se présente sous la forme d'une feuille qui peut être ensuite assemblée de manière à former un manchon (ouvert à une ou deux extrémités), soit à former une baudruche (système fermé pressurisable). Un manchon est destiné à être monté sur un organe gonflable alors qu'une baudruche constitue à la fois l'organe de gonflage et celui de l'impression. Le manchon monté sur l'organe gonflable ou la baudruche constituent la structure gonflable M, qui comprend l'empreinte inverse du dessin à imprimer sur le revêtement de la pièce. Les structures du moule secondaire doivent donc former une image inverse de l'image finale recherchée, il s'agit d'une image négative.
- L'application d'un revêtement, par exemple sous la forme d'une peinture, sur le substrat à structurer, l'introduction de la structure gonflable M à l'intérieur des pièces à structurer, l'expansion progressive (qui peut être réalisée notamment par mise en pression), puis la mise en contact de la structure gonflable M (manchon ou baudruche) sur le revêtement thermoplastique chaud ou en cours de polymérisation.

PREMIERE ETAPE : La fabrication des structures du moule primaire peut être réalisée de multiples façons. La méthode dépend de la dimension des structures, mais également de la forme requise (ultra-lisse ou bi ou tri dimensionnelle). Les structures peuvent être fabriquées par meulage, ablation laser, rainurage diamant, usinage grande vitesse, électroérosion, gravure chimique, etc ... La nature du matériau dépend de la méthode de fabrication, mais également de la tenue à la réplique du moule primaire.

Le moule primaire peut être constitué d'une plaque plane ou d'une forme adaptée au volume dans lequel la structure gonflable M devra être introduite, par exemple, l'enveloppe de la partie statorique entourant l'arbre de transmission mécanique du rotor ou bien l'espace entre deux ailettes d'un impulseur ou d'un redresseur.

Dans le premier cas, l'organe gonflable pourra présenter un volume cylindrique.

Dans le second cas, il pourra présenter une forme convergente permettant son introduction dans le canal hydraulique avec éventuellement des arêtes correspondant au mode d'assemblage des ailettes sur les disques et couvercles des impulseurs et redresseurs.

Les dimensions de la pièce de moulage primaire qui est soit une plaque plane (fabrication d'une feuille pour l'assemblage d'un manchon ou d'une baudruche), soit une forme s'apparentant à celle du volume à imprimer sont en principe inférieures à celles de la pièce à imprimer compte tenu du fait que l'organe gonflable doit pouvoir être introduit sans entrer en contact avec le revêtement et éviter tout emprisonnement d'air entre cet organe et le revêtement. La conception du moule primaire a plusieurs conséquences sur le dimensionnement des structures. Le rapport des dimensions du moule primaire (ou du manchon ou de la baudruche) et celles de la pièce à imprimer détermine le taux d'expansion du moule secondaire selon trois directions orthogonales ou selon ses trois directions principales. L'expansion de l'organe gonflable entraîne une diminution relative des hauteurs des structures, ainsi qu'une augmentation relative de l'espacement entre ces structures. Les structures du moule primaire sont conçues en fonction de ces expansions selon trois directions orthogonales ou trois directions principales.

DEUXIEME ETAPE : Le moule secondaire servant de base à la structure gonflable M (manchon ou baudruche) est constitué d'une matière élastique, peu adhérente sur le moule primaire, peu perméable lors du gonflage de la baudruche, peu adhérente et chimiquement peu active avec le revêtement à imprimer lors de la phase de polymérisation (présence de solvants, amides, amines, polyol, isocyanate ...) ou avec un revêtement porté à haute température (thermoplastiques). Le moule peut également comprendre des flasques (Q et R) pour la mise en forme et la rigidification de l'ensemble du système.

Le matériau constituant le moule secondaire flexible peut donc être tout produit ou toute matière ayant de bonnes propriétés de réplique, une faible adhérence et de bonnes propriétés d'expansion.

Comme exemples de produits pouvant être utilisés pour le moule secondaire flexible, on peut notamment citer les élastomères ayant un fort taux d'expansion, notamment le caoutchouc, les silicones, ...., ou les matériaux de type KRATON ™ seuls ou en mélanges.

Le matériau préféré pour la baudruche est à base de silicone.

La membrane de la baudruche peut comprendre des matériaux de renfort pour permettre d'améliorer la résistance de la membrane lors de l'expansion longitudinale.

Le moule secondaire comporte plusieurs principes dimensionnels, l'un concerne ses dimensions globales et l'autre l'épaisseur de la membrane le constituant.

Les dimensions du moule secondaire sont avantageusement inférieures à celles de la pièce à imprimer compte tenu du fait que le moule doit pouvoir être introduit dans la pièce à imprimer sans entrer en contact avec le revêtement qui la recouvre.

De préférence, l'épaisseur du moule secondaire n'est pas uniforme de façon à permettre, au cours du gonflage, un premier contact sur la pièce à imprimer au niveau de l'épaisseur la plus faible puis un contact progressif dans la direction d'une augmentation de l'épaisseur de la membrane. Cette progression de l'épaisseur de la membrane, permet une mise en contact de l'organe gonflable progressif et, par conséquent, d'éviter tout emprisonnement d'air entre le moule et le revêtement.

La mise en pression de la structure gonflable M (baudruche ou manchon) permet la mise en contact du moule secondaire flexible avec les parois, la pression pouvant être augmentée au delà de ce niveau de pression pour faciliter la pénétration des structures du moule dans le revêtement à imprimer. Une augmentation de la pression à l'intérieur du moule entraîne une expansion continue de la baudruche dans la direction non limitée par des parois ainsi qu'un glissement des surfaces en contact entraînant un transfert de matière dans la direction du glissement et une diminution de l'épaisseur du revêtement dans la zone de glissement. Pour contrecarrer ce glissement néfaste à une distribution homogène de revêtement et la formation de bourrelets aux extrémités de la baudruche, le système de moulage peut comprendre un système limiteur de l'expansion (tiges d'extension P montées sur des flasques rigides Q et R et réunies intérieurement sur un anneau ou une rotule N) de la baudruche dans la direction non limitée en expansion par les parois.

TROISIEME ETAPE : L'application du revêtement peut être réalisée à l'aide d'une tuyère V1 montée sur une rampe d'injection U1, d'un pistolet ou tout autre moyen manuel (pinceau, tige filetée ...).

La mise en pression du moule secondaire flexible est assurée par le système O et effectuée préférentiellement avec un liquide (eau, huile) pour limiter la perméabilité du fluide au travers la membrane constituant le moule. Ce point est plus particulièrement important dans le cas d'une baudruche munie d'une seule interface entre le fluide de pressurisation et le revêtement contrairement à un manchon monté sur une surface gonflable. Dans ce second cas, un gaz peut être utilisé comme fluide de pressurisation, toute fuite au niveau de la membrane de l'organe gonflable pouvant s'échapper à l'interface entre cette membrane et le manchon.

Le temps nécessaire à l'impression (mise en contact du moule secondaire flexible avec le revêtement) peut être réduit en accélérant le processus de polymérisation ou durcissement. Ceci peut être réalisé de plusieurs façons différentes :
- en augmentant la température d'un revêtement thermodurcissable;
- en augmentant la réactivité entre le produit de base et le durcisseur;
- en abaissant la température d'un revêtement thermoplastique.

Les temps de polymérisation ou de durcissement peuvent varier entre quelques heures et quelques minutes.

Les revêtements utilisés comme support des surfaces structurées peuvent être de différentes natures chimiques : des résines époxydiques solvantées, des résines époxydiques non solvantées ou en émulsion dans l'eau, des polyuréthannes, des PVDF, des polyamides. La liste des revêtements pouvant être utilisés ne se limite pas à ces revêtements.

Le choix du revêtement s'effectue en fonction de différents critères : son adhérence, sa tenue à l'érosion, aux agents chimiques, à la corrosion ...

Le procédé selon l'invention peut être utilisé pour la structuration de pièces internes comprenant des revêtements déposés à froid, notamment : bases époxydiques sous formes solvantées (phénoliques), phase aqueuse, ou sans solvant, bases polyuréthanne, PVC, ou PVDF.

Le procédé selon l'invention peut également être utilisé pour la structuration de revêtements déposés à chaud, notamment du type polyamide, époxy, PVC, ou PVDF.

De façon à permettre une bonne adhérence de ces revêtements sur le substrat, avantageusement, ce dernier est préalablement grenaillé. Le grenaillage s'effectue à l'intérieur d'une roue à l'aide d'une grenailleuse V2 montée sur une rampe de grenaillage U2. La rampe de grenaillage se déplace sensiblement selon la forme des aubes. Un grenaillage avec une rugosité en Rz de 50 µm permettra une bonne accroche du revêtement sur le substrat.

Les pièces pouvant être structurées avec le procédé selon l'invention à l'intérieur des machines tournantes comprennent, de manière non limitative :
- les tubulures d'entrée et de sortie des machines tournantes;
- les ailettes dans le cas de cellules hydrauliques axiales;
- le canal hydraulique des parties rotoriques et statoriques dans le cas de cellules hydrauliques radiales ou radio axiales;
- les parties externes des impulseurs radiaux (couvercle et disque) ainsi que les parties en vis-à-vis avec les impulseurs;
- l'enveloppe entourant l'arbre de transmission au niveau des parties statoriques dans les machines radiales.

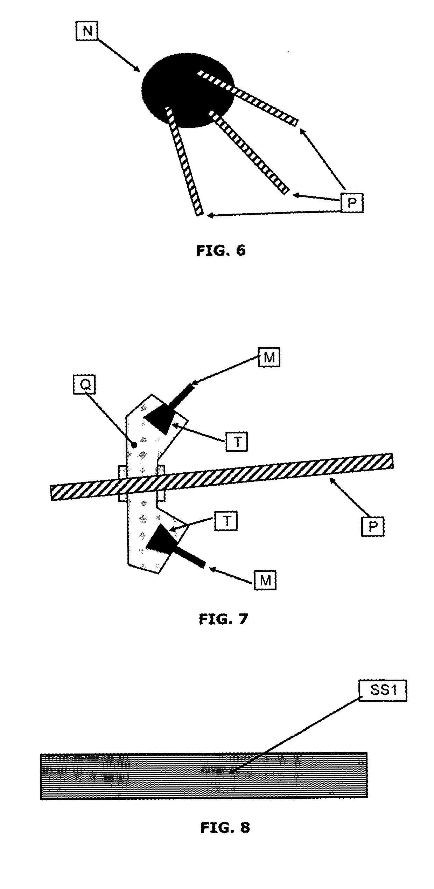

Les structures sont toujours orientées dans le sens de l'écoulement. Ainsi, elles peuvent avoir les formes suivantes, représentées par les figures 8 à 11 :
- SS1 dans le cas d'aubes de roue de machine radiale;
- SS2 dans le cas de disques ou de couvercles de roue de machine radiale et concernant les parties internes (à l'intérieur du canal hydraulique);
- SS3 dans le cas de disques ou de couvercles de roue de machine radiale et concernant les parties externes (à l'extérieur du canal hydraulique);
- SS4 dans le cas des parois ou murs des éléments statoriques.

## Revendications

1. Procédé d'impression d'une surface structurée sur au moins une pièce interne de machines tournantes qui comprend les étapes suivantes :
a. fabrication d'un moule primaire comprenant des éléments structurés sur sa surface sous forme d'image positive du dessin à imprimer;
b. fabrication d'un moule secondaire flexible obtenu par réplique du moule primaire, ledit moule secondaire étant de dimension inférieure à la pièce à structurer;
c. application d'un revêtement permettant l'impression sur le substrat de la pièce à structurer,
d. introduction d'une structure gonflable M comprenant le moule secondaire flexible à l'intérieur de la pièce à structurer,
e. expansion radiale de la structure gonflable M sur le revêtement pour effectuer l'impression,
f. retrait de la structure gonflable M,
le rapport des dimensions du moule primaire et celles de la pièce à imprimer déterminant le taux d'expansion du moule secondaire selon ses trois directions principales et les structures du moule primaire étant conçues en fonction de ces expansions selon ses trois directions principales.

2. Procédé d'impression selon la revendication 1 dans lequel le substrat de la pièce à structurer est grenaillé avant l'application du revêtement.

3. Procédé d'impression selon la revendication 1 dans lequel l'expansion radiale e. est effectuée par mise sous pression de la structure gonflable M .

4. Procédé d'impression selon la revendication 3 dans lequel on effectue le retrait de la structure gonflable M par diminution de la pression et pelage.

5. Procédé d'impression selon l'une des revendications 1 à 4 dans lequel on effectue le retrait de la structure gonflable M par variation de l'expansion axiale et pelage.

6. Procédé d'impression selon l'une des revendications précédentes dans lequel la structure gonflable M est un manchon monté sur un organe de gonflage ou une baudruche.

7. Procédé d'impression selon l'une des revendications précédentes dans lequel le revêtement est polymérisable et l'expansion de la structure gonflable M est réalisée au cours de la phase de polymérisation du revêtement.

8. Procédé d'impression selon l'une des revendications précédentes dans lequel le revêtement est thermoplastique et l'expansion de la structure gonflable M est réalisée en chauffant avant ou en cours d'impression le revêtement et en le refroidissant juste avant la phase de retrait.

9. Procédé d'impression selon l'une des revendications précédentes dans lequel on limite l'expansion de la structure gonflable M dans la direction non limitée en expansion par les parois au moyen d'un système limiteur de l'expansion constitué de tiges d'extension P montées sur des flasques rigides Q et R et réunies intérieurement sur un anneau ou une rotule N.

10. Procédé d'impression selon l'une des revendications précédentes dans lequel l'état de surface de la pièce requis après impression est ultra lisse.

11. Procédé d'impression selon l'une des revendications 1 à 9 dans lequel l'état de surface de la pièce requis après impression est structuré de manière bi ou tridimensionnelle.

12. Pièce interne de machines tournantes en contact avec un fluide en écoulement turbulent comportant une surface structurée orientée dans le sens de l'écoulement et imprimée selon le procédé des revendications 1 à 11.

13. Pièce interne de machines tournantes selon la revendication 12 située dans les tubulures d'entrée et de sortie des machines tournantes ; les ailettes dans le cas de cellules hydrauliques axiales ; le canal hydraulique des parties rotoriques et statoriques dans le cas de cellules hydrauliques radiales ou radio axiales;les parties externes des impulseurs radiaux (couvercle et disque) ainsi que les parties en vis-à-vis avec les impulseurs ; l'enveloppe entourant l'arbre de transmission au niveau des parties statoriques dans les machines radiales.

14. Méthode de réduction de la traînée dans les machines tournantes rotodynamiques en contact avec un fluide en écoulement turbulent comportant la structuration d'au moins une pièce interne au moyen du procédé d'impression selon l'une des revendications 1 à 11.
